# EUROPEAN PATENT SPECIFICATION

(11) **EP 4 467 947 B1**
(45) Date of publication and mention of the grant of the patent: **09.12.2026**
(21) Application number: 22920559.6
(22) Date of filing: 15.12.2022
(51) Int. Cl.: G01L 1/20

(54) **PRESSURE SENSITIVE SENSOR UNIT**
DRUCKEMPFINDLICHE SENSOREINHEIT
UNITÉ DE CAPTEUR SENSIBLE À LA PRESSION

(30) Priority: 17.01.2022 JP 2022005182
(43) Date of publication of application: 27.11.2024
(73) Proprietor: Fujikura Ltd., Tokyo 135-8512 (JP)
(72) Inventor: WATANABE, Masami, Sakura-shi, Chiba 285-8550 (JP)
(74) Representative: Ter Meer und Partner mbB
(86) International application number: PCT/JP2022/046268
(87) International publication number: WO 2023/136041

(56) References cited:
- WO-A1-2013/146995
- CN-B- 109 690 272
- JP-A- 2007 163 322
- JP-A- 2020 034 425
- JP-B1- 5 782 582
- KR-A- 20110 124 964
- KR-A- 20110 124 964
- US-A1- 2012 272 751
- US-B2- 6 829 942

## Description

### TECHNICAL FIELD

The present invention relates to a pressure sensitive sensor unit including a pressure sensitive sensor that detects the magnitude of an applied load.

### BACKGROUND ART

A known pressure sensitive sensor includes an upper circuit board having a pair of interdigitated comb-shaped electrodes and a lower circuit board having a disk-shaped electrode facing the comb-shaped electrodes. In this pressure sensitive sensor, at least one of the three electrodes described above is a pressure sensitive resistive body (see, for example, Patent Document 1 (paragraphs [0002] to [0005] and Figs. 1(a) to 1(c))). In addition, another known pressure sensitive sensor includes an upper circuit board having a disk-shaped pressure sensitive resistive body and a lower circuit board having a disk-shaped counter electrode facing the pressure sensitive resistive body (see, for example, Patent Document 1 (paragraphs [0006] to [0008] and Figs. 2(a) to 2(c))).

In the pressure sensitive sensors described above, when a load is applied from above to the upper circuit board, the electrodes arranged below the portion to which the load is applied come into direct contact with each other. Then, as the load increases further, the contact area between the electrodes increases and the resistance value decreases. The pressure sensitive sensors described above detect the magnitude of the load by using such a change in resistance value.

### CITATION LIST

### PATENT DOCUMENT

Patent Document 1: JP 2002-158103 A
KR 2011 0124964 A discloses a pressure sensitive sensor unit includes: a first pressure sensitive sensor whose output changes according to a magnitude of an applied load; a second pressure sensitive sensor whose output changes according to a magnitude of an applied load; a plate member arranged so as to include the first and second pressure sensitive sensors in plan view; a first load transmitting member interposed between the first pressure sensitive sensor and the plate member; and a second load transmitting member interposed between the second pressure sensitive sensor and the plate member. The first load transmitting member transmits a load belonging to a first load range to the first pressure sensitive sensor. The second load transmitting member transmits a load belonging to a second load range larger than the first load range to the second pressure sensitive sensor.
Similar pressure sensitive sensors are diclosed in CN 109 690 272 B and JP 2020 034425 A.

### SUMMARY OF THE INVENTION

### PROBLEM TO BE SOLVED BY THE INVENTION

Known pressure sensitive sensors such as those described above have a problem that the range of a load that can be detected may be narrow.

A problem to be solved by the invention is to provide a pressure sensitive sensor unit capable of detecting a wide range of loads.

### MEANS FOR SOLVING PROBLEM

In order to solve this problem, the invention provides a pressure sensitive sensor as specified in independent claims 1 and 7. More specific optional features of the invention are indicated in the dependent claims.

### EFFECT OF THE INVENTION

The pressure sensitive sensor unit according to the invention includes the first load transmitting member that transmits a load belonging to the first load range to the first pressure sensitive sensor and the second load transmitting member includes the first load transmitting member that transmits a load belonging to the first load range to the first pressure sensitive sensor and the second load transmitting member that transmits a load belonging to the second load range larger than the first load range to the second pressure sensitive sensor. Therefore, since the pressure sensitive sensor unit according to the invention can detect a load in both the first range and the second range, it is possible to increase the detectable load range.

### BRIEF DESCRIPTION OF DRAWINGS

Fig. 1 is a plan view showing an example of a pressure sensitive sensor unit according to an embodiment of the invention;
Fig. 2 is a cross-sectional view taken along the line II-II of Fig. 1;
Fig. 3(a) is a cross-sectional view showing a state in which a low load is applied to the pressure sensitive sensor unit in Fig. 2, and Fig. 3(b) is a cross-sectional view showing a state in which a high load is applied to the pressure sensitive sensor unit in Fig. 2;
Fig. 4 is a graph showing the relationship between the magnitude F of a load applied to the pressure sensitive sensor unit according to the embodiment of the invention and a resistance value R output from the pressure sensitive sensor unit;
Fig. 5 is a cross-sectional view showing a first modification example of the pressure sensitive sensor unit according to the embodiment of the invention;
Fig. 6 is a cross-sectional view showing a second modification example of the pressure sensitive sensor unit according to the embodiment of the invention;
Fig. 7(a) is an enlarged plan view showing a pressure sensitive sensor according to a third modification example of the pressure sensitive sensor unit according to the embodiment of the invention, Fig. 7(b) is an enlarged plan view showing a lower membrane of the pressure sensitive sensor unit in Fig. 7(a), and Fig. 7(c) is an enlarged plan view showing a spacer and an upper membrane of the pressure sensitive sensor unit in Fig. 7(a); and
Fig. 8 is an enlarged plan view showing a pressure sensitive sensor according to a fourth modification example of the pressure sensitive sensor unit according to the embodiment of the invention, Fig. 8(b) is an enlarged plan view showing a lower membrane of the pressure sensitive sensor in Fig. 8(a), and Fig. 8(c) is an enlarged plan view showing an upper membrane of the pressure sensitive sensor in Fig. 8(a).

### MODE(S) FOR CARRYING OUT THE INVENTION

Hereinafter, an embodiment of the invention will be described with reference to the diagrams.

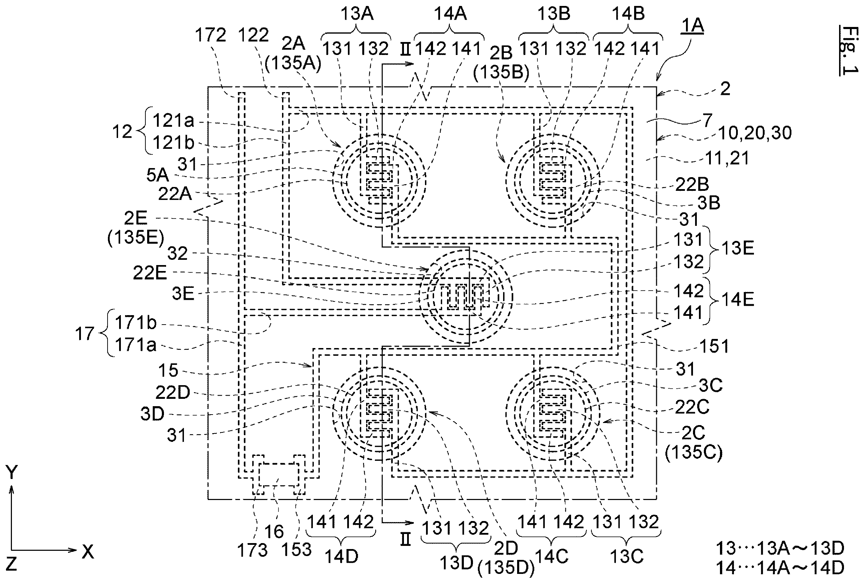

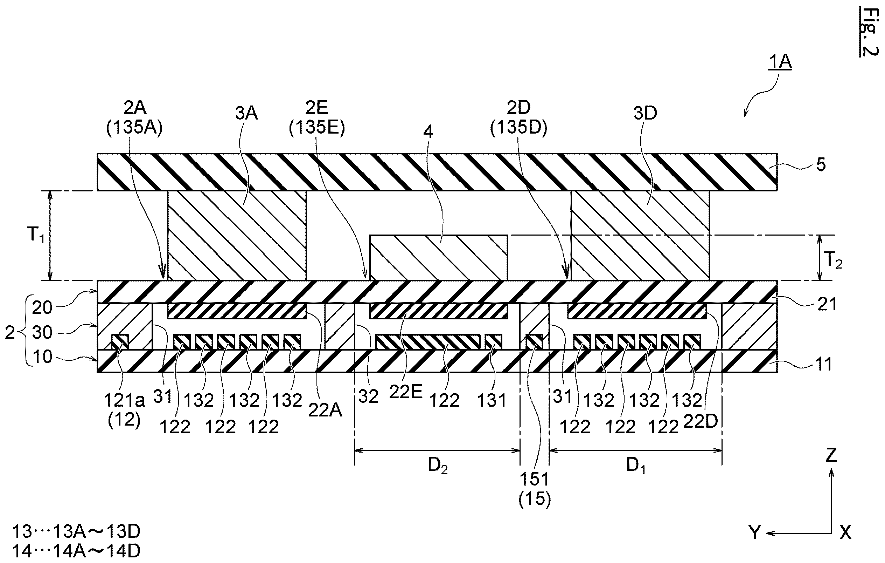

Fig. 1 is a plan view showing an example of a pressure sensitive sensor unit according to an embodiment of the invention. Fig. 2 is a cross-sectional view taken along the line II-II of Fig. 1. In addition, Fig. 2 shows a pressure sensitive sensor unit in an unloaded state in which no load is applied.

A pressure sensitive sensor unit 1A is a pressure sensitive sensor unit whose output changes according to the magnitude of the applied load. In the present embodiment, a resistance value is used as this output. In addition, this output is not limited to the resistance value, but may be, for example, a voltage value.

As shown in Figs. 1 and 2, the pressure sensitive sensor unit 1A according to the present embodiment includes a pressure sensitive sensor sheet 2, a plurality of (four in this example) first load transmitting members 3A to 3D, a second load transmitting member 4, and a plate member 5.

The pressure sensitive sensor sheet 2 includes pressure sensitive sensors 2A to 2E whose resistance values change according to the magnitude of the applied load. In the present embodiment, the first pressure sensitive sensors 2A to 2D are used to detect a load (low load) belonging to a first load range (low load range), and the second pressure sensitive sensor 2E is used to detect a load (high load) belonging to a second load range (high load range) larger than the first load range.

Here, the load range refers to a range of the magnitude of the load. The first load range is not particularly limited, but may be, for example, 20 gf to 500 gf, and the second load range is not particularly limited, but may be, for example, 500 gf to 2000 gf.

As shown in Figs. 1 and 2, the pressure sensitive sensor sheet 2 according to the present embodiment includes a lower membrane substrate 10, an upper membrane substrate 20, and a spacer 30.

As shown in Figs. 1 and 2, the lower membrane substrate 10 has a first base material 11, a first wiring pattern 12, a first electrode group 13 (13A to 13D), a second electrode group 14 (14A to 14D), a third electrode 13E, a fourth electrode 14E, a second wiring pattern 15, a resistive body 16, and a third wiring pattern 17.

The first base material 11 of the lower membrane substrate 10 is a film-like member formed of a flexible and electrically insulating material. Examples of the material that makes up the first base material 11 include resin materials. More specifically, polyethylene terephthalate (PET) or polyethylene naphthalate (PEN) can be exemplified. In addition, the first base material 11 does not have to be flexible.

As shown in Fig. 1, the first wiring pattern 12 is formed on the upper surface of the first base material 11. The first wiring pattern 12 in the present embodiment functions as a lead-out wiring that electrically connects the above-described first electrode group 13 and third electrode 13E to a power supply (not shown).

The first wiring pattern 12 has a first wiring portion 121a, a second wiring portion 121b, and a first external terminal portion 122. The first wiring portion 121a has a U-shaped linear shape. One end of the first wiring portion 121a is connected to the second wiring portion 121b. The second wiring portion 121b has an L-shaped linear shape, and one end of the second wiring portion 121b is connected to the first external terminal portion 122. The first external terminal portion 122 is a terminal portion that is electrically connected to a power supply (not shown).

The first wiring pattern 12 is formed by printing a conductive paste on the upper surface of the first base material 11 and solidifying (curing) the conductive paste. The conductive paste is made by mixing conductive particles and a binder resin with water or a solvent and various additives. The conductive paste that makes up the first wiring pattern 12 is a low-resistance conductive paste having a relatively small electrical resistance value. In addition, the method of forming the first wiring pattern 12 is not particularly limited to the above. For example, instead of using the conductive paste, the first wiring pattern 12 may be formed by etching a metal foil.

Specific examples of conductive particles include silver, copper, nickel, tin, bismuth, zinc, indium, palladium, and alloys thereof. In addition, specific examples of the binder resin include acrylic resin, polyester resin, epoxy resin, vinyl resin, urethane resin, phenol resin, polyimide resin, silicone resin, and fluorine resin. In addition, examples of the solvent contained in the conductive paste include α-terpineol, butyl carbitol acetate, butyl carbitol, 1-decanol, butyl cellosolve, diethylene glycol monoethyl ether acetate, and tetradecane.

Although not particularly limited, in the present embodiment, a silver paste containing silver as a main component of conductive particles or a copper paste containing copper as a main component of conductive particles is used as the low-resistance conductive paste. In addition, metal salts may be used as conductive particles contained in the conductive paste. As metal salts, salts of the metals described above can be mentioned. In addition, the binder resin may be omitted from the conductive paste described above. In addition, instead of the conductive paste described above, a conductive ink may be used.

The method of applying the conductive paste is not particularly limited, but either a contact application method or a non-contact application method may be used. Specific examples of the contact application method include screen printing, gravure printing, offset printing, gravure offset printing, and flexographic printing. On the other hand, specific examples of the non-contact application method include inkjet printing, a spray coating method, a dispense coating method, and a jet dispensing method. In addition, the heat source for curing the conductive paste is not particularly limited, but examples thereof include an electric heating oven, an infrared oven, a far-infrared oven (IR), a near-infrared oven (NIR), and a laser irradiation device, and a heat treatment using a combination thereof may also be applied.

The first electrode group 13 is connected to the first wiring portion 121a of the first wiring pattern 12. The first electrode group 13 includes a plurality of (four in this example) first electrodes 13A to 13D. In the first electrode group 13, the first electrodes 13A to 13D are arranged on the first wiring portion 121a so as to be electrically connected in parallel to each other. In addition, in the present embodiment, the first electrodes 13A to 13D are arranged so as to surround the third electrode 13E and the fourth electrode 14E.

In the present embodiment, the first electrodes 13A to 13D all have the same configuration. Therefore, the configuration of the first electrode 13A will be described herein as a representative example.

The first electrode 13A is a comb-shaped electrode. The first electrode 13A has a connection wiring portion 131 and a plurality of (three in this example) comb-tooth portions 132. The connection wiring portion 131 is a linear portion extending along the Y direction in the diagram, and one end of the connection wiring portion 131 is connected to the first wiring portion 121a of the first wiring pattern 12.

The plurality of comb-tooth portions 132 are connected to the other end side of the connection wiring portion 131. As shown in Figs. 1 and 2, the plurality of comb-tooth portions 132 are aligned in parallel along the Y direction in the diagrams, and protrude from the connection wiring portion 131 in the +X direction in the diagrams.

The second electrode group 14 is arranged on the first base material 11 so as to be adjacent to the first electrode group 13. The second electrode group 14 includes a plurality of (four in this example) second electrodes 14A to 14D.

The second electrodes 14A to 14D are arranged adjacent to the first electrodes 13A to 13D, respectively. In addition, the second electrodes 14A to 14D are arranged slightly spaced apart from the first electrodes 13A to 13D so as to be electrically insulated from the first electrodes 13A to 13D. In the present embodiment, the second electrodes 14A to 14D are arranged so as to surround the third electrode 13E and the fourth electrode 14E, similarly to the first electrodes 13A to 13D.

In addition, in the present embodiment, the plurality of first pressure sensitive sensors 2A to 2D are arranged so as to surround the second pressure sensitive sensor 2E, but the invention is not limited to this. For example, in the pressure sensitive sensor unit 1A, the first pressure sensitive sensor and the second pressure sensitive sensor may be arranged alternately.

In the present embodiment, the second electrodes 14A to 14D all have the same configuration. Therefore, the configuration of the second electrode 14A will be described herein as a representative example.

The second electrode 14A has a planar shape point-symmetrical with respect to the first electrode 13A. The second electrode 14A has a connection wiring portion 141 and a plurality of (three in this example) comb-tooth portions 142. The connection wiring portion 141 is a linear portion extending along the Y direction in the diagram. The plurality of comb-tooth portions 142 are connected to one end side of the connection wiring portion 141. The plurality of comb-tooth portions 142 are aligned along the Y direction in the diagram, and protrude from the connection wiring portion 141 in the -X direction in the diagram. Then, the comb-tooth portions 142 are inserted between the comb-tooth portions 132 of the first electrode 13A, and face the comb-tooth portions 132 of the first electrode 13A along the Y direction in the diagram.

The above-described first and second electrodes 13A to 13D and 14A to 14D are formed by printing a conductive paste on the upper surface of the first base material 11 and then solidifying (curing) the conductive paste. The conductive paste is a high-resistance conductive paste having a relatively high electrical resistance. In addition, instead of the conductive paste, a conductive ink may be used.

Examples of conductive particles contained in the conductive paste include carbon. Specific examples of the carbon include graphite and carbon black. In addition, specific examples of the binder resin and the solvent include the materials described above. In addition, the binder resin may be omitted from the conductive paste. The method of applying the conductive paste is not particularly limited, but either the contact application method or the non-contact application method described above may be used.

The second wiring pattern 15 is connected to the other ends of the connection wiring portions 141 of the second electrodes 14A to 14D. The second wiring pattern 15 electrically connects the second electrodes 14A to 14D and the resistive body 16 to each other.

The second wiring pattern 15 is formed of the same material as the first wiring pattern 12 although there is no particular limitation thereto. In addition, although not particularly limited, the second wiring pattern 15 is formed by printing a conductive paste on the upper surface of the first base material 11 and solidifying (curing) the conductive paste, similarly to the first wiring pattern 12.

The second wiring pattern 15 has a third wiring portion 151 and a first resistive body connection portion 153. The third wiring portion 151 has a linear shape, and the second electrodes 14A to 14D are arranged on the third wiring portion 151 so as to be electrically connected in parallel to each other.

The first resistive body connection portion 153 is connected to the other end of the third wiring portion 151. The first resistive body connection portion 153 in the present embodiment is a land pattern that is wider than the third wiring portion 151, although there is no particular limitation thereto.

The resistive body 16 is connected to the first resistive body connection portion 153. The resistive body 16 in the present embodiment is arranged on the second wiring pattern 15 so as to be electrically connected in series to the second electrode group 14. The resistive body 16 has a resistance value R₁ (constant) larger than the resistance value Rₓ₂ in the ON state of the second pressure sensitive sensor 2E. The resistive body 16 is provided to make the combined resistance R₀ (= R₁ + Rₓ₁) of the resistance value R₁ of the resistive body 16 and the resistance value Rₓ₁ in the ON state of the first pressure sensitive sensors 2A to 2D larger than the resistance value Rₓ₂ in the ON state of the second pressure sensitive sensor 2E (R₀ > Rₓ₂).

In addition, the "ON state" of the first pressure sensitive sensors 2A to 2D is a state in which the first electrodes 13A to 13D and the second electrodes 14A to 14D are electrically connected to each other through connection bodies 22A to 22D, and the "ON state" of the second pressure sensitive sensor 2E is a state in which the third electrode 13E and the fourth electrode 14E are electrically connected to each other through a connection body 22E. Here, in the present embodiment, "electrically connecting" a connection body and an electrode means a state in which the resistance value between the connection body and the electrode is equal to or less than a predetermined threshold value, and does not include a state in which the connection body and the electrode are simply in contact with each other. In addition, the resistance values Rₓ₁ and Rₓ₂ in the "ON state" are variables that change according to the magnitude of the load, as will be described later.

The resistive body 16 may be a resistor although there is no particular limitation thereto. Alternatively, the resistive body 16 may be formed by printing a high-resistance conductive paste on the upper surface of the first base material 11 and solidifying (curing) the conductive paste. Examples of conductive particles contained in the conductive paste include the above-described carbon. In addition, specific examples of the binder resin and the solvent include the materials described above. In addition, the binder resin may be omitted from the conductive paste. The method of applying the conductive paste is not particularly limited, but either the contact application method or the non-contact application method described above may be used.

In the present embodiment, the resistive body 16 is electrically connected in series to the second electrode group 14 and is arranged on the power supply side with respect to the first pressure sensitive sensors 2A to 2D, but is not limited thereto. For example, the resistive body 16 may be electrically connected in series to the first electrode group 13 and arranged on the power supply side with respect to the first pressure sensitive sensors 2A to 2D.

Although not particularly shown, specifically, in the first wiring pattern 12 shown in Fig. 1, by interposing the resistive body 16 between the first wiring portion 121a and the second wiring portion 121b, the resistive body 16 can be electrically connected in series to all of the first electrodes 13A and 13B included in the first electrode group 13. In this case as well, the above-described combined resistance R₀ (= R₁ + Rₓ₁) can be made larger than the resistance value Rₓ₂ in the ON state of the second pressure sensitive sensor 2E (R₀ > Rₓ₂).

The comb-shaped third electrode 13E is connected to the other end of the second wiring portion 121b of the first wiring pattern 12. The third electrode 13E has the same configuration as the first electrode 13A, and includes a connection wiring portion 131 and a plurality of comb-tooth portions 132. However, the connection wiring portion 131 of the third electrode 13E extends along the X direction in the diagram. In addition, the comb-tooth portions 132 are aligned along the X direction in the diagram, and protrude from the connection wiring portion 131 in the -Y direction in the diagram.

The comb-shaped fourth electrode 14E is arranged on the first base material 11 so as to be adjacent to the third electrode 13E. The fourth electrode 14E is arranged slightly spaced apart from the third electrode 13E so as to be electrically insulated from the third electrode 13E.

The fourth electrode 14E has the same configuration as the second electrode 14A, and includes a connection wiring portion 141 and a plurality of comb-tooth portions 142. However, the connection wiring portion 141 of the fourth electrode 14E extends along the X direction in the diagram. In addition, the comb-tooth portions 142 of the fourth electrode 14E are aligned along the X direction in the diagram, and protrude from the connection wiring portion 141 in the +Y direction in the diagram.

The third wiring pattern 17 is connected to the resistive body 16 and the fourth electrode 14E. The third wiring pattern 17 functions as a lead-out wiring that electrically connects the second electrode group 14 and the fourth electrode 14E to the ground (not shown).

The third wiring pattern 17 has a fourth wiring portion 171a, a fifth wiring portion 171b, a second external terminal portion 172, and a second resistive body connection portion 173. The fourth wiring portion 171a has a linear shape extending in the Y direction in the diagram, and one end of the fourth wiring portion 171a is connected to the second external terminal portion 172.

The second external terminal portion 172 is a terminal portion that is electrically connected to the ground (not shown). In addition, in the present embodiment, the first external terminal portion 122 of the first wiring pattern 12 is electrically connected to a power supply (not shown) and the second external terminal portion 172 of the third wiring pattern 17 is connected to the ground (not shown), but the invention is not limited thereto. Contrary to the present embodiment, the first external terminal portion 122 may be electrically connected to the ground (not shown), and the second external terminal portion 172 may be connected to the power supply (not shown).

The other end of the fourth wiring portion 171a is connected to the second resistive body connection portion 173. The second resistive body connection portion 173 is a land pattern that is wider than the fourth wiring portion 171a, although there is no particular limitation thereto. The resistive body 16 is connected to the second resistive body connection portion 173, and the fourth wiring portion 171a is electrically connected to the second electrode group 14 through the resistive body 16 and the third wiring pattern 17. As a result, the second electrode group 14 is electrically connected to the ground (not shown).

The fifth wiring portion 171b has a linear shape extending in the X direction in the diagram, and one end of the fifth wiring portion 171b is connected to the fourth wiring portion 171a. On the other hand, the other end of the fifth wiring portion 171b is connected to the fourth electrode 14E. Therefore, the fourth electrode 4E is electrically connected to the ground (not shown) through the third wiring pattern 17.

The resistance value output from the pressure sensitive sensor unit 1A according to the present embodiment is a resistance value between the first external terminal portion 122 and the second external terminal portion 172 although there is no particular limitation thereto. The resistance value can be obtained by using, for example, a resistance measuring device such as a tester connected to the first external terminal portion 122 and the second external terminal portion 172.

As shown in Figs. 1 and 2, the upper membrane substrate 20 is arranged above the lower membrane substrate 10. The upper membrane substrate 20 has a second base material 21 and a plurality of (five in this example) connection bodies 22A to 22E.

The second base material 21 of the upper membrane substrate 20 is a film-like member formed of a flexible and electrically insulating material. Examples of the material that makes up the second base material 21 include resin materials. More specifically, polyethylene terephthalate (PET) or polyethylene naphthalate (PEN) can be exemplified. In addition, a metal film may be used as the second base material 21. In this case, the second base material 21 may have the functions of the connection bodies 22A to 22E, that is, the second base material 21 may also serve as the connection bodies 22A to 22E.

As shown in Figs. 1 and 2, the disk-shaped connection bodies 22A to 22E are formed on the lower surface of the second base material 21. The connection bodies 22A to 22D are members that come into contact with the first electrodes 13A to 13D and the second electrodes 14A to 14D to electrically connect the first electrodes 13A to 13D and the second electrodes 14A to 14D to each other. That is, the connection body 22A comes into contact with the first electrode 13A and the second electrode 14A to electrically connect the first electrode 13A and the second electrode 14A to each other. The connection body 22B comes into contact with the first electrode 13B and the second electrode 14B to electrically connect the first electrode 13B and the second electrode 14B to each other. The connection body 22C comes into contact with the first electrode 13C and the second electrode 14C to electrically connect the first electrode 13C and the second electrode 14C to each other. The connection body 22D comes into contact with the first electrode 13D and the second electrode 14D to electrically connect the first electrode 13D and the second electrode 14D to each other. In addition, the connection body 22E is also a member that comes into contact with the third electrode 13E and the fourth electrode 14E to electrically connect the third electrode 13E and the fourth electrode 14E to each other.

All of the connection bodies 22A to 22E are arranged so as to face parts of the connection wiring portions 131 and 141 and the comb-tooth portions 132 and 142, and have a size to include almost the entire comb-tooth portions 132 and 142 thereinside in plan view.

The connection bodies 22A to 22E are formed by printing a low-resistance conductive paste on the lower surface of the second base material 21 and curing the low-resistance conductive paste, similarly to the first wiring pattern 12 described above. That is, the connection bodies 22A to 22E are formed of a material having a lower electrical resistivity than the material that makes up the first to fourth electrodes 13A to 13E and 14A to 14E.

In addition, the connection bodies 22A to 22E may have a protective layer covering the above-described layer that is formed by printing and curing a high-resistance conductive paste. This protective layer is formed by printing and curing the above-described high-resistance conductive paste.

The spacer 30 is a film-like member formed of a flexible and electrically insulating material, similar to the first and second base materials 11 and 21 described above. Examples of the material that makes up the spacer 30 include resin materials. More specifically, polyethylene terephthalate (PET) or polyethylene naphthalate (PEN) can be exemplified. Alternatively, a double-sided adhesive tape can be exemplified as the spacer 30. A double-sided adhesive tape having adhesive layers formed on both surfaces of a base material may be used, or a double-sided adhesive tape having only adhesive layers may be used.

As shown in Figs. 1 and 2, the spacer 30 is interposed between the first base material 11 and the second base material 21, and the lower membrane substrate 10 and the upper membrane substrate 20 are stacked with the spacer 30 interposed therebetween. Specifically, the upper surface of the base material 11 of the lower membrane substrate 10 and the lower surface of the spacer 30 are attached to each other through an adhesive layer (not shown), and the upper surface of the spacer 30 and the lower surface of the base material 21 of the upper membrane substrate 20 are attached to each other through an adhesive layer (not shown).

The spacer 30 has a plurality of (four in this example) first openings 31 and a second opening 32. The plurality of first openings 31 are arranged so as to surround the second opening 32, as shown in Fig. 1. In addition, when the first pressure sensitive sensor and the second pressure sensitive sensor are arranged alternately as described above, the first opening and the second opening are also arranged alternately.

Each of the first openings 31 has a circular planar shape. Parts of the connection wiring portions 131 of the first electrodes 13A to 13D, the comb-tooth portions 132 of the first electrodes 13A to 13D, parts of the connection wiring portions 141 of the second electrodes 14A to 14D, and the comb-tooth portions 142 of the second electrodes 14A to 14D are housed in the first openings 31. In addition, the connection bodies 22A to 22D of the upper membrane substrate 20 are also housed in the first openings 31. In addition, the diameters of the connection bodies 22A to 22D may be larger than the inner diameter of the first opening 31.

When the membrane substrates 10 and 20 are stacked with the spacer 30 interposed therebetween, the connection bodies 22A to 22D and the comb-tooth portions 132 and 142 of the first and second electrodes 13A to 13D and 14A to 14D face each other with the first opening 31 interposed therebetween. In addition, similarly, the connection bodies 22A to 22D and parts of the connection wiring portions 131 and 141 of the first and second electrodes 13A to 13D and 14A to 14D face each other.

The second opening 32 also has a circular planar shape, and parts of the connection wiring portions 131 and 141 of the third and fourth electrodes 13E and 14E and the comb-tooth portions 132 and 142 of the third and fourth electrodes 13E and 14E are housed in the second opening 32. In addition, the connection body 22E of the upper membrane substrate 20 is also housed in the second opening 32. In addition, the diameter of the connection body 22E may be larger than the inner diameter of the second opening 32.

In addition, when the membrane substrates 10 and 20 are stacked with the spacer 30 interposed therebetween, the connection body 22E and the comb-tooth portions 132 and 142 of the third and fourth electrodes 13E and 14E face each other with the second opening 32 interposed therebetween. In addition, similarly, the connection body 22E and parts of the connection wiring portions 131 and 141 of the third and fourth electrodes 13E and 14E face each other.

As shown in Figs. 1 and 2, the spacer 30 ensures a distance between the connection bodies 22A to 22D and the comb-tooth portions 132 and 142 of the first and second electrodes 13A to 13D and 14A to 14D. In addition, the spacer 30 ensures a distance between the connection body 22E and the comb-tooth portions 132 and 142 of the third and fourth electrodes 13E and 14E.

Here, the second opening 32 in the present embodiment has the same width as the first opening 31. That is, as shown in Fig. 2, the diameter D₂ of the second opening 32 is the same as the diameter D₁ of the first opening 31 (D₁ = D₂).

In addition, although the diameter D₁ of the first opening 31 and the diameter D₂ of the second opening 32 are the same length in the present embodiment, the invention is not limited thereto. The diameter D₁ of the first opening 31 may be larger than the diameter D₂ of the second opening 32 (D₁ > D₂). Thus, the width of the first opening 31 is larger than the width of the second opening 32, so that the second base material 21 is likely to bend at the first opening 31. Therefore, since the magnitude of the on-load of the first pressure sensitive sensors 2A to 2D can be reduced, it is possible to improve the sensitivity of the first pressure sensitive sensors 2A to 2D in the low load range. In addition, the "on-load" is a load required to switch the pressure sensitive sensor from the OFF state to the ON state.

In addition, the planar shape of each of the first and second openings 31 and 32 is not limited to a circle, but may be, for example, an ellipse, an oval, a rectangle, or a polygon. In addition, the shapes of the connection bodies 22A to 22E or the electrodes 13A to 13E and 14A to 14E are not particularly limited to those described above, and may be, for example, shapes corresponding to the shapes of the first and second openings 31 and 32.

In addition, in the present embodiment, the thickness of the spacer 30 is set so that the connection bodies 22A to 22E are not in contact with the comb-tooth portions 132 and 142 when no load is applied, but the invention is not particularly limited thereto. The thickness of the spacer 30 may be set so that the connection bodies 22A to 22E are always in contact with the comb-tooth portions 132 and 142. Similarly, the thickness of the spacer 30 may be set so that the connection bodies 22A to 22E are always in contact with the connection wiring portions 131 and 141.

In addition, in the present embodiment, all of the first pressure sensitive sensors 2A to 2D and the second pressure sensitive sensor 2E are formed by the membrane substrates 10 and 20 and the spacer 30 of the pressure sensitive sensor sheet 2. However, the invention is not limited thereto, and the first and second pressure sensitive sensors 2A to 2E may be formed by separate membrane substrates and spacers. That is, the pressure sensitive sensor unit may be a unit formed by a plurality of pressure sensitive sensor sheets.

In addition, in this case, since the electrodes formed on the base material are likely to bend by reducing the thickness of the spacer of the pressure sensitive sensor sheet in which the first pressure sensitive sensor for low load is formed, it is possible to improve the sensitivity of the sensor in the low load range. Alternatively, since the electrodes are likely to bend by reducing the thickness of the base material, it is possible to improve the sensitivity of the sensor in the low load range.

In the pressure sensitive sensor sheet 2 according to the present embodiment, the connection bodies 22A to 22D and the first and second electrodes 13A to 13D and 14A to 14D form the first pressure sensitive sensors 2A to 2D and function as first detection units 135A to 135D that detect a load applied to the first pressure sensitive sensors 2A to 2D. That is, the connection body 22A, the first electrode 13A, and the second electrode 14A form the first pressure sensitive sensor 2A and function as the first detection unit 135A that detects a load applied to the first pressure sensitive sensor 2A. The connection body 22B, the first electrode 13B, and the second electrode 14B form the first pressure sensitive sensor 2B and function as the first detection unit 135B that detects a load applied to the first pressure sensitive sensor 2B. The connection body 22C, the first electrode 13C, and the second electrode 14C form the first pressure sensitive sensor 2C and function as the first detection unit 135C that detects a load applied to the first pressure sensitive sensor 2C. The connection body 22D, the first electrode 13D, and the second electrode 14D form the first pressure sensitive sensor 2D and function as the first detection unit 135D that detects a load applied to the first pressure sensitive sensor 2D. On the other hand, the connection body 22E and the third and fourth electrodes 13E and 14E form the second pressure sensitive sensor 2E and function as a second detection unit 135E that detects a load applied to the second pressure sensitive sensor 2E.

Specifically, when a load is applied to the first detection units 135A to 135D of the first pressure sensitive sensor 2A to 2D, the second base material 21 bends downward at the first opening 31, and the connection bodies 22A to 22D come into contact with the first and second electrodes 13A to 13D and 14A to 14D. Here, as the magnitude of the load applied to the first detection units 135A to 135D increases, the contact area between the connection bodies 22A to 22D and the first and second electrodes 13A to 13D and 14A to 14D increases. Therefore, the resistance value Rₓ₁ between the first and second electrodes 13A to 13D and 14A to 14D decreases. That is, in the first pressure sensitive sensors 2A to 2D, as the magnitude of the applied load increases, the resistance value Rₓ₁ that is output decreases.

Similarly, even when a load is applied to the second detection unit 135E of the second pressure sensitive sensor 2E, the second base material 21 bends downward at the second opening 32, and the connection body 22E comes into contact with the third and fourth electrodes 13E and 14E. In this case as well, as the magnitude of the load applied to the second detection unit 135E increases, the contact area between the connection body 22E and the third and fourth electrodes 13E and 14E increases. Therefore, the resistance value Rₓ₂ between the third and fourth electrodes 13E and 14E decreases. That is, in the second pressure sensitive sensor 2E as well, as the magnitude of the applied load increases, the resistance value Rₓ₂ that is output decreases.

In the present embodiment, the first electrodes 13A to 13D and the third electrode 13E have the same configuration, and the second electrodes 14A to 14D and the fourth electrode 14E have the same configuration. Therefore, the resistance value Rₓ₁ in the ON state of the first pressure sensitive sensors 2A to 2D is approximately the same as the resistance value Rₓ₂ in the ON state of the second pressure sensitive sensor 2E (Rₓ₁ = Rₓ₂).

In addition, in the present embodiment, the first pressure sensitive sensors 2A to 2D are electrically connected in parallel to each other between the first wiring pattern 12 and the second wiring pattern 15. Then, the first pressure sensitive sensor 2E is electrically connected in parallel with the first pressure sensitive sensors 2A to 2D between the first wiring pattern 12 and the second wiring pattern 15.

A plurality of (four in this example) first load transmitting members 3A to 3D and a second load transmitting member 4 are provided on the upper surface of the second base material 21 of the pressure sensitive sensor sheet 2. The first load transmitting members 3A to 3D are members (actuators) for transmitting a load to the first pressure sensitive sensors 2A to 2D. On the other hand, the second load transmitting member 4 is a member (actuator) for transmitting a load to the second pressure sensitive sensor 2E.

In the present embodiment, the first load transmitting members 3A to 3D and the second load transmitting member 4 are members each having a circular planar shape and having elasticity. That is, the first load transmitting members 3A to 3D and the second load transmitting member 4 are members that contract when a load is applied but return to their initial shapes before the load is applied when the load is removed. In addition, the planar shapes of the first load transmitting members 3A to 3D and the second load transmitting member 4 are not limited to the circular shape. The planar shape is not limited to a circle, and may be, for example, an ellipse, an oval, a rectangle, or a polygon. In addition, the first load transmitting members 3A to 3D and the second load transmitting member 4 may be rigid bodies.

Specific examples of the member having elasticity as described above include a resin member, a rubber member, and a spring member. Among these, it is particularly preferable to use a sponge-like resin member containing fine bubbles.

As shown in Fig. 2, the first load transmitting members 3A to 3D are interposed between the first detection units 135A to 135D of the first pressure sensitive sensors 2A to 2D and the plate member 5. Specifically, the lower surfaces of the first load transmitting members 3A to 3D are attached to the upper surface of the second base material 21 of the upper membrane substrate 20 through an adhesive layer (not shown), and the upper surfaces of the first load transmitting members 3A to 3D are attached to the lower surface of the plate member 5 through an adhesive layer (not shown). That is, both the upper and lower surfaces of the first load transmitting members 3A to 3D are fixed to the second base material 21 and the plate member 5.

In addition, the first load transmitting members 3A to 3D are bonded to the second base material 21 and the plate member 5 through an adhesive layer, but the invention is not limited thereto. For example, the first load transmitting members 3A to 3D may be bonded to the second base material 21 or the plate member 5 by being applied and formed thereon.

The second load transmitting member 4 is interposed between the second detection unit 135E of the second pressure sensitive sensor 2E and the plate member 5. The lower surface of the second load transmitting member 4 is attached to the upper surface of the second base material 21 of the upper membrane substrate 20 through an adhesive layer (not shown), but the upper surface of the second load transmitting member 4 is spaced apart from the plate member 5. That is, only the lower surface of the second load transmitting member 4 is fixed to the second base material 21.

In addition, the second load transmitting member 4 is bonded to the second base material 21 through an adhesive layer, but the invention is not limited thereto. For example, the second load transmitting member 4 may be bonded to the second base material 21 by being applied and formed thereon. In addition, the lower surface of the second load transmitting member 4 is fixed to the second base material 21, but the invention is not limited thereto. The upper surface of the second load transmitting member 4 may be bonded to the plate member 5, and the lower surface of the second load transmitting member 4 may be spaced apart from the second base material 21.

The height T₁ of the first load transmitting members 3A to 3D is higher than the height T₂ of the second load transmitting member 4 (T₁ > T₂). In this manner, by making a difference between the height T₁ of the first load transmitting members 3A to 3D and the height T₂ of the second load transmitting member 4, the load can be transmitted to the first pressure sensitive sensors 2A to 2D before the second pressure sensitive sensor 2E. That is, when a low load is applied to the pressure sensitive sensor unit 1A, the load is transmitted to the first pressure sensitive sensors 2A to 2D by the first load transmitting members 3A to 3D, but the load is not transmitted to the second pressure sensitive sensor 2E by the second load transmitting member 4. On the other hand, when a high load is applied to the pressure sensitive sensor unit 1A, the load is also transmitted to the second pressure sensitive sensor 2E by the second load transmitting member 4.

The plate member 5 overlaps the pressure sensitive sensor sheet 2 with the first and second load transmitting members 3A to 3D interposed therebetween, and is arranged so as to include the first and second pressure sensitive sensors 2A to 2E in plan view. The plate member 5 is a plate-shaped member formed of a material having a predetermined rigidity. By forming the plate member 5 with a member that is difficult to bend, it is possible to generate a uniform pressing force on the lower surface of the plate member 5. Examples of the material that makes up the plate member 5 include an ABS (acrylonitrile butadiene styrene) resin, glass, and a polycarbonate resin.

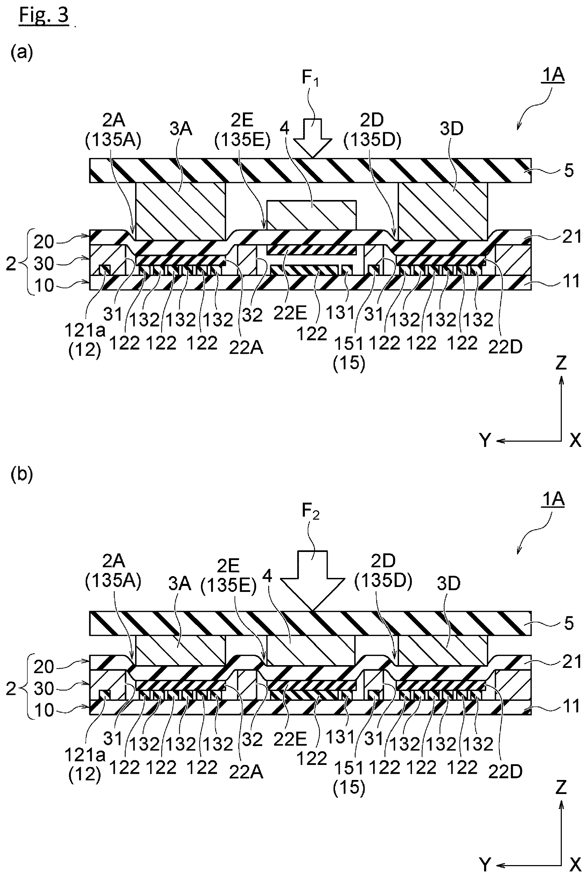

The load transmission by the first load transmitting members 3A to 3D and the second load transmitting member 4 will be specifically described with reference to Figs. 3(a) and 3(b). Fig. 3(a) is a cross-sectional view showing a state in which a low load is applied to the pressure sensitive sensor unit 1A in Fig. 2, and Fig. 3(b) is a cross-sectional view showing a state in which a high load is applied to the pressure sensitive sensor unit 1A in Fig. 2.

As shown in Fig. 3(a), when a low load F₁ is applied to the pressure sensitive sensor unit 1A from the plate member 5 side, the load is transmitted from the plate member 5 to the first load transmitting members 3A to 3D bonded to the lower surface of the plate member 5. That is, the first load transmitting members 3A to 3D are pressed in the -Z direction in the diagram by the lower surface of the plate member 5.

Then, the second base material 21 is bent downward at the first opening 31 by the load transmitted from the first load transmitting members 3A to 3D. That is, the first load transmitting members 3A to 3D concentrate the load on the first pressure sensitive sensors 2A to 2D. As a result, at the first opening 31 of the spacer 30, the connection bodies 22A to 22D formed on the lower surface of the second base material 21 are pressed downward to be electrically connected to the first and second electrode groups 13 and 14 of the first pressure sensitive sensors 2A to 2D.

On the other hand, since the amount of contraction of the first load transmitting members 3A to 3D is small, the second load transmitting member 4 is spaced apart from the plate member 5 and accordingly, the load is not transmitted from the plate member 5 to the second load transmitting member 4. Therefore, the second load transmitting member 4 does not press the second base material 21, and the connection body 22E is not pressed downward. That is, the third electrode 13E and the fourth electrode 14E of the first pressure sensitive sensor 2E are maintained in a state (off state) in which these are insulated from each other.

As shown in Fig. 3(b), when a high load F₂ is applied to the pressure sensitive sensor unit 1A from the plate member 5 side, the plate member 5 is pressed further downward and the first load transmitting members 3A to 3D contract significantly. Therefore, the lower surface of the plate member 5 comes into contact with the second load transmitting member 4. That is, in addition to the first load transmitting members 3A to 3D, the second load transmitting member 4 is also pressed in the -Z direction in the diagram by the lower surface of the plate member 5.

The second base material 21 is bent downward at the second opening 32 by the load transmitted from the second load transmitting member 4. As a result, at the second opening 32 of the spacer 30, the connection body 22E is pressed downward to be electrically connected to the third and fourth electrodes 13E and 14E of the second pressure sensitive sensor 2E.

Thus, in the pressure sensitive sensor unit 1A according to the present embodiment, only the first pressure sensitive sensors 2A to 2D are in the ON state when a low load is applied, whereas not only the first pressure sensitive sensors 2A to 2D but also the second pressure sensitive sensor 2E is in the ON state when a high load is applied.

In addition, as shown in Figs. 1 and 2, the first load transmitting members 3A to 3D are arranged on the upper surface of the second base material 21 so that the first load transmitting members 3A to 3D surround the second load transmitting member 4. That is, since the first pressure sensitive sensors 2A to 2D according to the present embodiment are arranged around the second pressure sensitive sensor 2E, the first load transmitting members 3A to 3D are also arranged around the second load transmitting member 4. Therefore, when a load is applied to the pressure sensitive sensor unit 1A, the load can be transmitted uniformly from the lower surface of the plate member 5 while stably supporting the plate member 5 by the plurality of first load transmitting members 3A to 3D arranged around the second load transmitting member 4. As a result, it is possible to detect the load accurately.

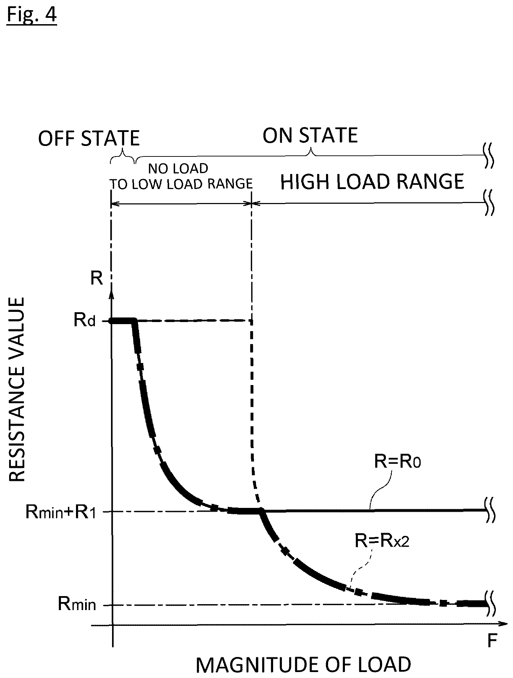

The change in the resistance value output from the pressure sensitive sensor unit 1A as described above will be described with reference to Fig. 4 in addition to Figs. 1, 2, 3(a) and 3(b). Fig. 4 is a graph showing the relationship between the magnitude F of a load applied to the pressure sensitive sensor unit 1A according to the present embodiment and the resistance value R output from the pressure sensitive sensor unit 1A. In the graph of Fig. 4, the solid line indicates the combined resistance R₀ of the resistance value Rₓ₁ of the first pressure sensitive sensors 2A to 2D and the resistance value R₁ of the resistive body 16, and the broken line indicates the resistance value Rₓ₂ of the second pressure sensitive sensor 2E. In addition, the dashed line indicates the resistance value R output from the pressure sensitive sensor unit 1A, and in the present embodiment, the resistance value R is a resistance value between the first external terminal portion 122 and the second external terminal portion 172.

First, as shown in Fig. 2, when there is no load, the electrodes 13A to 13E and 14A to 14E of all the pressure sensitive sensors 2A to 2E are electrically insulated from each other, so that all the pressure sensitive sensors 2A to 2E are in the OFF state. In this case, as shown in Fig. 4, a resistance value R_{d} of several hundred MΩ is output from the pressure sensitive sensor unit 1A as the resistance value R.

Then, as shown in Fig. 3(a), when the low load F₁ equal to or greater than a predetermined level is applied to the pressure sensitive sensor unit 1A, the first pressure sensitive sensors 2A to 2D are switched to the ON state. In other words, at the low load F₁ equal to or lower than a predetermined level, the resistance value between the connection bodies 22A to 22D and the first and second electrodes 13A to 13D and 14A to 14D exceeds a threshold value, so that the first pressure sensitive sensors 2A to 2D are maintained in the OFF state. In addition, the second pressure sensitive sensor 2E is maintained in the OFF state in the low load range.

At this time, as shown in Fig. 1, the first pressure sensitive sensors 2A to 2D are electrically connected in parallel to each other, and the resistive body 16 is electrically connected in series to the second electrode group 14 of the first pressure sensitive sensors 2A to 2D. Therefore, the resistance value R output from the pressure sensitive sensor unit 1A is the combined resistance R₀ of the resistance value Rₓ₁ of the first pressure sensitive sensors 2A to 2D and the resistance value R₁ of the resistive body 16.

In this case, as shown in Fig. 4, as the magnitude of the load increases in the low load range, the resistance value Rₓ₁ of the first pressure sensitive sensors 2A to 2D decreases, and finally the resistance value Rₓ₁ saturates at the minimum resistance value (push-through resistance) Rₘᵢₙ. For this reason, as shown by the solid line in the graph of Fig. 4, the combined resistance R₀ also decreases as the magnitude of the load increases, and finally saturates near the resistance value Rₘᵢₙ + R₁.

Then, as shown in Fig. 3(b), when the high load F₂ is applied to the pressure sensitive sensor unit 1A, the second pressure sensitive sensor 2E is also switched to the ON state. As shown by the broken line in the graph of Fig. 4, as the magnitude of the load increases in the high load range, the resistance value Rₓ₂ of the second pressure sensitive sensor 2E decreases. Since no resistive body is connected to the second pressure sensitive sensor 2E and the resistance value R₁ of the resistive body 16 described above is larger than the resistance value Rₓ₂, the resistance value Rₓ₂ falls below the value of the combined resistance R₀ when the magnitude of the high load reaches a magnitude equal to or greater than a predetermined level.

When the resistance value Rₓ₂ falls below the value of the combined resistance R₀ described above, the current flowing through the second pressure sensitive sensor 2E becomes more dominant than the current flowing through the first pressure sensitive sensors 2A to 2D. Therefore, the resistance value R output from the pressure sensitive sensor unit 1A becomes the resistance value Rₓ₂ of the second pressure sensitive sensor 2E. Thus, in the present embodiment, by electrically connecting the resistive body 16 in series to the second electrode group 14, the range of the resistance value output in the low load range and the range of the resistance value output in the high load range can be distinguished from each other to avoid duplication.

Then, since the resistance value Rₓ₂ of the second pressure sensitive sensor 2E saturates near the push-through resistance value Rₘᵢₙ as the magnitude of the load further increases, the resistance value R output from the pressure sensitive sensor unit 1A also saturates near the push-through resistance value Rₘᵢₙ. Therefore, the resistance value R of the pressure sensitive sensor unit 1A becomes an output shown by the dashed line in Fig. 4.

The pressure sensitive sensor unit 1A described above includes the first load transmitting member 3A to 3D for transmitting a low load to the first pressure sensitive sensor 2A to 2D and the second load transmitting member 4 for transmitting a high load to the second pressure sensitive sensor 2E. Therefore, since the pressure sensitive sensor unit 1A can obtain an output (resistance value R) in both the low load range and the high load range, it is possible to increase the detectable load range.

In addition, in the embodiment described above, the first load transmitting members 3A to 3D, the second load transmitting member 4, and the plate member 5 are arranged on the second base material 21 side of the upper membrane substrate 20, but the invention is not limited thereto.

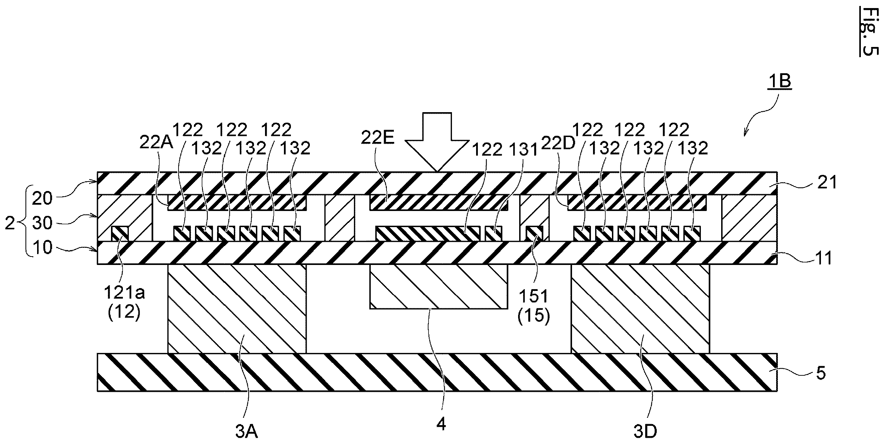

Fig. 5 is a cross-sectional view showing a first modification example of the pressure sensitive sensor unit according to the present embodiment. Like a pressure sensitive sensor unit 1B according to the first modification example, the first load transmitting members 3A to 3D, the second load transmitting member 4, and the plate member 5 may be arranged on the first base material 11 side of the lower membrane substrate 10.

In this case, when a low load is applied from the second base material 21 side, the load is transmitted to the first pressure sensitive sensors 2A to 2B by the first load transmitting members 3A to 3D, as in the embodiment described above. Then, when a high load is applied from the second base material 21 side, as in the embodiment described above, as the first load transmitting members 3A to 3D contract, the second load transmitting member 4 comes into contact with the plate member 5 and accordingly, the load is transmitted to the first pressure sensitive sensors 2A to 2B. In addition, in this case, it is preferable to make the second base material 21 difficult to bend. Specifically, two or more second base materials 21 may be stacked on the spacer 30, or the thickness of the second base material 21 may be increased. In addition, as the first base material 11 to which the load is transmitted from the first and second load transmitting members 3A to 3D and 4, a flexible one is used.

In addition, in the embodiment described above, the height T₁ of the first load transmitting members 3A to 3D is set to be higher than the height T₂ of the second load transmitting member 4 so that a load is less likely to be applied to the second pressure sensitive sensor 2E in the low load range, but the invention is not limited thereto.

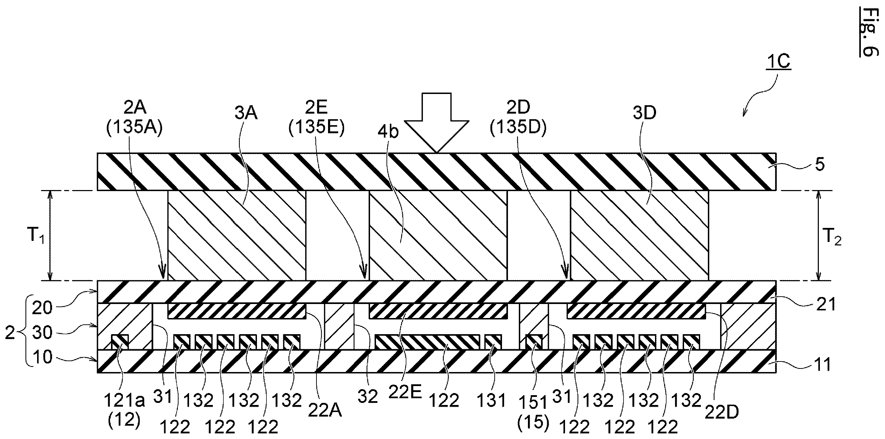

Fig. 6 is a cross-sectional view showing a second modification example of the pressure sensitive sensor unit according to the present embodiment. As in a pressure sensitive sensor unit 1C according to the second modification example, a second load transmitting member 4b may be made softer than the first load transmitting members 3A to 3D so that a load is less likely to be applied to the second pressure sensitive sensor 2E in the low load range. As a material that makes up the second load transmitting member 4b, a material having a low Young's modulus among the above-described sponge-like resin material, rubber material, and spring material may be used.

In addition, in this case, the height T₁ of the first load transmitting members 3A to 3D and the height T₂ of the second load transmitting member 4b are the same (T₁ = T₂). Since the first load transmitting members 3A to 3D are harder than the second load transmitting member 4b, a load is more easily transmitted to the first load transmitting members 3A to 3D than to the second load transmitting member 4b in the low load range. Therefore, in the second modification example as well, similarly to the embodiment described above, a load is less likely to be applied to the second pressure sensitive sensor 2E in the low load range.

In addition, in the embodiment described above, interdigitated comb-shaped electrodes are used as the first and second electrodes 13A to 13E and 14A to 14E of the first pressure sensitive sensors 2A to 2E, but the shape of each electrode is not limited thereto. The shape of each electrode may be a shape shown in the following third modification example.

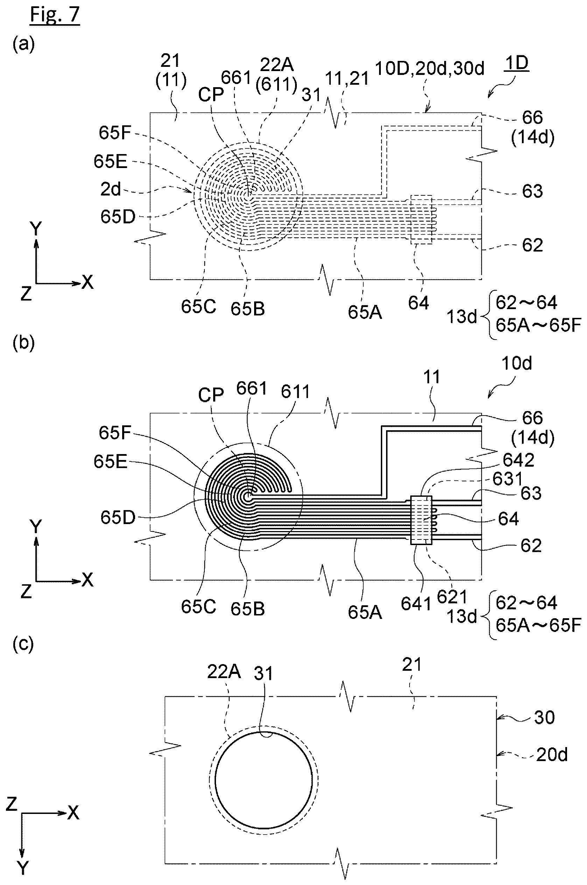

Fig. 7(a) is an enlarged plan view showing a pressure sensitive sensor according to the third modification example of the pressure sensitive sensor unit according to the embodiment of the invention, Fig. 7(b) is an enlarged plan view showing a lower membrane of the pressure sensitive sensor in Fig. 7(a), and Fig. 7(c) is an enlarged plan view showing an upper membrane of the pressure sensitive sensor in Fig. 7(a).

As shown in Figs. 7(a) and 7(b), a first pressure sensitive sensor 2d of a pressure sensitive sensor unit 1D according to the third modification example is a pressure sensitive sensor in which a resistance value between wiring patterns 62 and 66 changes according to the applied load. A first electrode 13d in the third modification example has wiring patterns 62 and 63, a resistive body 64, and comb-tooth patterns 65A to 65F.

As shown in Fig. 7(b), the wiring patterns 62 and 63 are formed by printing the low-resistance conductive paste described above on the upper surface of the first base material 11 of the lower membrane substrate 10d and solidifying (curing) the conductive paste. In addition, instead of using the conductive paste, the wiring patterns 62 and 63 may be formed by etching a metal foil.

As shown in Fig. 7(b), the wiring pattern 62 extends linearly along the X direction in the diagram. An end portion 621 of the wiring pattern 62 is covered with the resistive body 64, and the comb-tooth pattern 65A is connected to the end portion 621. Similarly, the wiring pattern 63 also extends linearly along the X direction in the diagram. An end portion 631 of the wiring pattern 63 is covered with the resistive body 64, and the comb-tooth pattern 65F is connected to the end portion 631. Although not particularly shown, one wiring pattern 62 is connected to a power supply, whereas the other wiring pattern 63 is connected to the ground. In addition, the planar shapes of the wiring patterns 62 and 63 are not limited to the linear shapes described above so long as these are linear.

The end portion 621 of the wiring pattern 62 and the end portion 631 of the wiring pattern 63 are arranged so as to be spaced apart from each other in the Y direction in the diagram. The resistive body 64 is provided along the Y direction in the diagram, so that one end portion 641 of the resistive body 64 covers the end portion 621 of the wiring pattern 62 and the other end portion 642 of the resistive body 64 covers the end portion 631 of the wiring pattern 63. Therefore, the wiring pattern 62 on one side and the wiring pattern 63 on the other side are electrically connected to each other through the resistive body 64. The resistive body 64 is formed by printing a high-resistance conductive paste on the upper surface of the base material 11 and then curing the conductive paste.

The plurality of (six in this example) comb-tooth patterns 65A to 65F are formed by printing a low-resistance conductive paste on the first base material 11 and curing the conductive paste, similarly to the wiring patterns 62 and 63 described above. In addition, instead of using the conductive paste, the comb-tooth patterns 65A to 65F may be formed by etching a metal foil.

The comb-tooth patterns 65A to 65F are arranged substantially parallel to each other at distances therebetween in a facing region 611 of the first base material 11 facing the connection body 22A. The comb-tooth patterns 65A to 65F are aligned at distances therebetween from the inside to the outside in the facing region 611. In addition, the comb-tooth patterns 65A to 65F are arranged concentrically with respect to the center CP of a distal end portion 661 of the wiring pattern 66 in the facing region 611.

A second electrode 14d in the third modification example is the wiring pattern 66. The wiring pattern 66 is also formed by printing a low-resistance conductive paste on the upper surface of the base material 11 and then curing the conductive paste, similarly to the wiring patterns 62 and 63 described above. In addition, instead of using the conductive paste, the wiring pattern 66 may be formed by etching a metal foil.

As shown in Fig. 7(c), the configuration of the connection body 20A formed on the lower surface of the second base material 21 of the upper membrane substrate 20d is the same as that in the embodiment described above.

In the first pressure sensitive sensor 2d, when a load is applied, first, the connection body 22A comes into contact with the center CP of the distal end portion 661 of the wiring pattern 66 shown in Fig. 7(b). Then, as bending at the first opening 31 of the second base material 21 increases, the connection body 22A comes into contact with the comb-tooth pattern 65F.

When the connection body 22A is in contact with the wiring pattern 66 and the comb-tooth pattern 65F, the wiring pattern 66 detects a voltage that is almost the same potential as the ground, and a potential difference between the power supply voltage and the detected voltage of the wiring pattern 66 is output from a multimeter (not shown) or the like connected to the wiring patterns 62 and 66.

Then, as the applied load increases, the bending of the second base material 21 increases, and the connection target of the connection body 22A expands to the outer comb-tooth patterns 65E to 65A. Therefore, the distance between one end portion 641 of the resistive body 64 and the connection position of the connection target decreases, resulting in a decrease in the resistance value between the wiring patterns 62 and 66. That is, in the first pressure sensitive sensor 2d according to the third modification example, since the resistance length (resistance value) of the resistive body 64 changes according to the magnitude of the applied load, the voltage detected by the wiring pattern 66 changes according to the magnitude of the load.

In the third modification example, an example has been described in which the first pressure sensitive sensor 2d has the configuration shown in Fig. 7(a). However, the invention is not limited thereto, and the second pressure sensitive sensor may also have the configuration as shown in Fig. 7(a).

In addition, although not particularly shown, the wiring pattern 63 may not be provided and the power supply and the ground may be connected to the wiring patterns 62 and 66. Alternatively, instead of the wiring pattern 63, the wiring pattern 66 may be covered with the other end portion 642 of the resistive body 64. Even in these cases, the resistance value between the wiring patterns 62 and 66 changes according to the magnitude of the load.

In addition, in the embodiment described above, a case has been described in which all of the first to fourth electrodes are formed on the same base material and the first to fourth electrodes are electrically connected to each other by the connection body, but the invention is not limited thereto. As in the following fourth modification example, electrodes may be electrically connected to each other by direct contact between the electrodes.

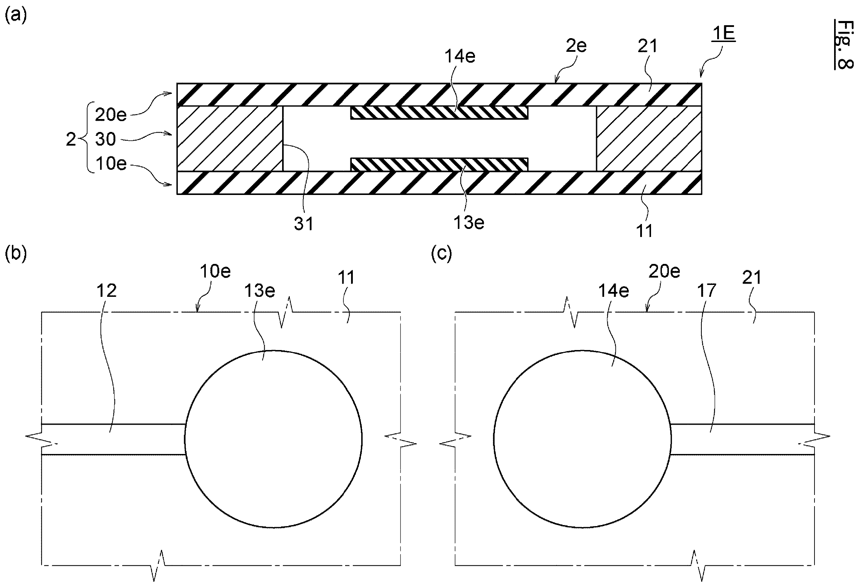

Fig. 8(a) is an enlarged cross-sectional view showing a pressure sensitive sensor according to a fourth modification example of the pressure sensitive sensor unit according to the present embodiment, Fig. 8(b) is an enlarged plan view showing a lower membrane of the pressure sensitive sensor in Fig. 8(a), and Fig. 8(c) is an enlarged plan view showing an upper membrane of the pressure sensitive sensor in Fig. 8(a).

As shown in Figs. 8(a) to 8(c), a first pressure sensitive sensor 2e of a pressure sensitive sensor unit 1E according to the fourth modification example includes a disk-shaped first electrode 13e formed on the upper surface of a first base material 11 of a lower membrane substrate 10e and a disk-shaped second electrode 14e formed on the lower surface of a second base material 21 of an upper membrane substrate 20e.

The first electrode 13e and the second electrode 14e face each other at the first opening 31 of the spacer 30. The first and second electrodes 13e and 14e can be formed by printing and curing a pressure sensitive ink, for example. An example of the pressure sensitive ink is a quantum tunnel composite material using the quantum tunneling effect. In addition, other specific examples of the pressure sensitive ink include one containing conductive particles such as metal or carbon, elastic particles such as organic elastic filler or inorganic oxide filler, and a binder. The surface of the pressure sensitive ink is made uneven by the elastic particles. In addition, the first and second electrodes 13e and 14e may be formed by plating or patterning.

When a load is applied to the first pressure sensitive sensor 2e, the second base material 21 bends downward at the first opening 31, causing the first electrode 13e and the second electrode 14e to come into contact with each other and become electrically connected to each other.

In the fourth modification example, an example has been described in which the first pressure sensitive sensor 2e has the configuration shown in Fig. 8(a). However, the invention is not limited thereto, and the second pressure sensitive sensor may also have the configuration shown in Fig. 8(a).

In addition, the embodiment described above is described to facilitate the understanding of the invention, and is not described to limit the invention. The invention is defined by the appended claims.

### EXPLANATIONS OF LETTERS OR NUMERALS

1A to 1E PRESSURE SENSITIVE SENSOR UNITS
2 PRESSURE SENSITIVE SENSOR SHEET
2A to 2D, 2d, 2e FIRST PRESSURE SENSITIVE SENSORS
2E SECOND PRESSURE SENSITIVE SENSOR
10, 10d, 10e LOWER MEMBRANE SUBSTRATES
11 BASE MATERIAL
12 FIRST WIRING PATTERN
121a, 121b FIRST AND SECOND WIRING PORTIONS
122 FIRST EXTERNAL TERMINAL PORTION
13 FIRST ELECTRODE GROUP
13A to 13D, 13d, 13e FIRST ELECTRODES
14 SECOND ELECTRODE GROUP
14A to 14D, 14d, 14e SECOND ELECTRODES
13E THIRD ELECTRODE
14E FOURTH ELECTRODE
131, 141 CONNECTION WIRING PORTION
132, 142 COMB-TOOTH PORTION
135A to 135D FIRST DETECTION UNITS
135E SECOND DETECTION UNIT
15 SECOND WIRING PATTERN
151 THIRD WIRING PORTION
153 FIRST RESISTIVE BODY CONNECTION PORTION
16 RESISTIVE BODY
17 THIRD WIRING PATTERN
171a, 171b FOURTH AND FIFTH WIRING PORTIONS

## Claims

1. A pressure sensitive sensor unit (1A-E), comprising:
a first pressure sensitive sensor (2A-D, 2d, 2e) whose output changes according to a magnitude of an applied load;
a second pressure sensitive sensor (2E) whose output changes according to a magnitude of an applied load;
a plate member (5) arranged so as to include the first and second pressure sensitive sensors (2A-D, 2d, 2e; 2E) in plan view;
a first load transmitting member (3A-D) interposed between the first pressure sensitive sensor and the plate member; and
a second load transmitting member (4b) interposed between the second pressure sensitive sensor (2E) and the plate member (5),
wherein the first load transmitting member transmits a load belonging to a first load range to the first pressure sensitive sensor, and
the second load transmitting member (3A-D) transmits a load belonging to a second load range larger than the first load range to the second pressure sensitive sensor (2E),
**characterized in that**
the first pressure sensitive sensor (2A-D, 2d, 2e) includes first and second electrodes (13-D, 13d, 13e; 14A-D, 14d, 14e) electrically connected to each other by application of a load,
the second pressure sensitive sensor (2E) includes third and fourth electrodes (13E; 14E) electrically connected to each other by application of a load, and
the pressure sensitive sensor unit (1A-E), includes a resistive body (16) electrically connected in series to the first or second electrode of the first pressure sensitive sensor (2A-D, 2d, 2e),
a resistance value of the resistive body (16) is larger than a resistance value of the second pressure sensitive sensor (2E) in a state in which the third electrode and the fourth electrode are electrically connected.

2. The pressure sensitive sensor unit according to claim 1,
wherein a height of the first load transmitting member (3A-D) is higher than a height of the second load transmitting member (4b), or
the second load transmitting member (4b) is softer than the first load transmitting member (3A-D).

3. The pressure sensitive sensor unit according to claim 1
wherein the pressure sensitive sensor unit includes a plurality of the first pressure sensitive sensors (2A-D, 2d, 2e),
the pressure sensitive sensor unit (1A-E) includes:
a first electrode group (13) including a plurality of the first electrodes (13A-D) electrically connected to each other; and
a second electrode group (14) including a plurality of the second electrodes (14A-D) electrically connected to each other, and
the resistive body (16) is electrically connected in series to the first or second electrode group.

4. The pressure sensitive sensor unit according to any one of claims 1 to 3,
wherein the pressure sensitive sensor unit (1A-E) includes:
a first base material (11); and
a second base material (21) facing the first base material (11),
the first electrode (13A-D) is provided on the first base material (11), and
the second electrode (14A-D) is provided on the first base material (11) so as to face a first connection body provided on the second base material (21) so as to face the first electrode or is provided on the second base material so as to face the first electrode.

5. The pressure sensitive sensor unit according to any one of claims 1 to 4,
wherein the pressure sensitive sensor unit includes:
a first base material (11); and
a second base material (21) facing the first base material,
the third electrode (13E) is provided on the first base material (11), and
the fourth electrode (14E) is provided on the first base material (11) so as to face a second connection body provided on the second base material (21) so as to face the third electrode or is provided on the second base material so as to face the third electrode.

6. The pressure sensitive sensor unit according to claim 4 or 5,
wherein a height of the first load transmitting member (3A-D) is higher than a height of the second load transmitting member (4b),
the first load transmitting member (3A-D) is bonded to at least one of the first and second base materials and bonded to the plate member (5), and
the second load transmitting member (4b) is bonded to only one of the first base material (11), the second base material (21), and the plate member (5).

7. A pressure sensitive sensor unit (1A-E), comprising:
a first pressure sensitive sensor (2A-D, 2d, 2e) whose output changes according to a magnitude of an applied load;
a second pressure sensitive sensor (2E) whose output changes according to a magnitude of an applied load;
a plate member (5) arranged so as to include the first and second pressure sensitive sensors (2A-D, 2d, 2e; 2E) in plan view;
a first load transmitting member (3A-D) interposed between the first pressure sensitive sensor and the plate member; and
a second load transmitting member (4b) interposed between the second pressure sensitive sensor (2E) and the plate member (5),
wherein the first load transmitting member transmits a load belonging to a first load range to the first pressure sensitive sensor, and
the second load transmitting member (3A-D) transmits a load belonging to a second load range larger than the first load range to the second pressure sensitive sensor (2E),
**characterized in that**
the first pressure sensitive sensor (2A-D, 2d, 2e) includes first and second electrodes (13-D, 13d, 13e; 14A-D, 14d, 14e) electrically connected to each other by application of a load,
the second pressure sensitive sensor (2E) includes third and fourth electrodes (13E; 14E) electrically connected to each other by application of a load, and
the pressure sensitive sensor unit (1A-E), includes a resistive body (16) electrically connected in series to the first or second electrode of the first pressure sensitive sensor (2A-D, 2d, 2e),
the pressure sensitive sensor unit includes:
a first base material (11); and
a second base material (21) facing the first base material,
the first electrode (13A-D, 13d, 13e) is provided on the first base material 811), and
the second electrode (14A-D, 14d, 14e)is provided on the first base material (11) so as to face a first connection body provided on the second base material (21) so as to face the first electrode or is provided on the second base material so as to face the first electrode,
the pressure sensitive sensor unit includes a spacer (30) interposed between the first base material (11) and the second base material (21),
the spacer (30) includes:
a first opening (31) in which the first and second electrodes of the first pressure sensitive sensor are housed; and
a second opening (32) in which the third and fourth electrodes of the second pressure sensitive sensor are housed, and
a width of the first opening (31) is larger than a width of the second opening (32).

8. The pressure sensitive sensor unit according to any one of claims 1 to 7,
wherein the pressure sensitive sensor unit includes:
a plurality of the first pressure sensitive sensors (2A-D, 2d, 2e); and
a plurality of the first load transmitting members (3A-D),
the plurality of first pressure sensitive sensors (2A-D, 2d, 2e) are arranged around the second pressure sensitive sensor (2E), and
the plurality of first load transmitting members (3A-D) are arranged around the second load transmitting member (4).

## Patentansprüche

1. Eine druckempfindliche Sensoreinheit (1A-E), umfassend:
einen ersten druckempfindlichen Sensor (2A-D, 2d, 2e), dessen Ausgangssignal sich je nach Größe der angelegten Last ändert;
einen zweiten druckempfindlichen Sensor (2E), dessen Ausgangssignal sich je nach Größe der angelegten Last ändert;
ein Plattenteil (5), das so angeordnet ist, dass es die ersten und zweiten druckempfindlichen Sensoren (2A-D, 2d, 2e; 2E) in der Grundrissansicht umschließt;
ein erstes lastübertragendes Element (3A-D) zwischen dem ersten druckempfindlichen Sensor und dem Plattenteil; und
ein zweites lastübertragendes Element (4b) zwischen dem zweiten druckempfindlichen Sensor (2E) und dem Plattenteil (5),
wobei das erste lastübertragende Element eine in einem ersten Lastbereich liegende Last aus dem ersten Lastbereich auf den ersten druckempfindlichen Sensor überträgt, und
das zweite lastübertragende Element (3A-D) eine Last, die in einem zweiten Lastbereich oberhalb des ersten Lastbereichliegt, an den zweiten druckempfindlichen Sensor (2E) überträgt, dadurch **gekennzeichnent**, dass
der erste druckempfindliche Sensor (2A-D, 2d, 2e) eine erste und eine zweiten Elektrode (13-D, 13d, 13e; 14A-D, 14d, 14e) aufweist, die durch das Anlegen einer Last elektrisch miteinander verbunden werden,
der zweite druckempfindliche Sensor (2E) eine dritte und eine vierte Elektrode (13E; 14E) umfasst, die durch das Anlegen einer Last elektrisch miteinander verbunden werden, und
die druckempfindliche Sensoreinheit (1A-E) einen Widerstandskörper (16) aufweist, der elektrisch in Reihe mit der ersten oder zweiten Elektrode des ersten druckempfindlichen Sensors (2A-D, 2d, 2e) geschaltet ist,
wobei ein Widerstandswert des Widerstandskörpers (16) ist größer als der des zweiten druckempfindlichen Sensors (2E) in ein Zustand, in dem die dritte und die vierte Elektrode elektrisch miteinander verbunden sind.

2. Die druckempfindliche Sensoreinheit nach Anspruch 1,
bei der die Höhe des ersten lastübertragenden Elements (3A-D) größer ist als die Höhe des zweiten lastübertragenden Elements (4b), oder
das zweite lastübertragende Element (4B) weicher ist als das erste lastübertragende Element (3A-D).

3. Die druckempfindliche Sensoreinheit nach Anspruch 1
bei der die druckempfindliche Sensoreinheit eine Vielzahl der ersten druckempfindlichen Sensoren umfasst (2A-D, 2d, 2e),
die druckempfindliche Sensoreinheit (1A-E) umfasst:
eine erste Elektrodengruppe (13), die eine Vielzahl der ersten Elektroden (13A-D) enthält, die elektrisch miteinander verbunden sind; und
eine zweite Elektrodengruppe (14), die mehrere der zweiten Elektroden (14A-D) enthält, die elektrisch miteinander verbunden sind, und
Der Widerstandskörper (16) elektrisch in Reihe mit der ersten oder zweiten Elektrodengruppe geschaltet ist.

4. Die druckempfindliche Sensoreinheit nach einem der Ansprüche 1 bis 3,
bei der die druckempfindliche Sensoreinheit (1A-E) enthält:
ein erstes Basismaterial (11); und
ein zweites Basismaterial (21), das dem ersten Basismaterial zugewandt ist (11),
die erste Elektrode (13A-D) auf dem ersten Basismaterial (11) angebracht ist , und
die zweite Elektrode (14A-D) so auf dem ersten Basismaterial (11) angebracht ist, dass sie einem ersten Verbindungskörper zugewandt ist, der auf dem zweiten Basismaterial (21) angebracht und der ersten Elektrode zugewandt ist, oder auf dem zweiten Basismaterial angebracht und der ersten Elektrode zugewandt ist.

5. Die druckempfindliche Sensoreinheit nach einer der Ansprüche 1 bis 4,
wobei die druckempfindliche Sensoreinheit folgendes umfasst:
ein erstes Basismaterial (11); und
ein zweites Basismaterial (21), das dem ersten Basismaterial zugewandt ist,
die dritte Elektrode (13E) auf dem ersten Basismaterial (11) vorgesehen ist, und
die vierte Elektrode (14E) auf dem ersten Basismaterial (11) angebracht ist und einem zweiten Verbindungskörper zugewandt ist, der auf dem zweiten Basismaterial (21) angebracht und der dritten Elektrode zugewandt ist, oder auf dem zweiten Basismaterial angebracht und der dritten Elektrode zugewandt ist.

6. Die druckempfindliche Sensoreinheit nacht Anspruch 4 oder 5,
bei der die Höhe des ersten lastübertragenden Elements (3A-D) grüßer ist als die Höhe des zweiten lastübertragenden Elements (4b),
das erste lastübertragende Element (3A-D) mit mindestens einem der ersten und zweiten Basismaterialien und mit dem Plattenteil (5) verbunden ist, und
das zweite lastübertragende Element (4b) nur mit einem der elemente: erstes Basismaterial (11), zweites Basismaterial (21) und Plattenteil (5) verbunden ist.

7. Eine druckempfindliche Sensoreinheit (1A-E), umfasend:
einen ersten druckempfindlichen Sensor (2A-D, 2d, 2e), dessen Ausgangssignal sich je nach Größe der angelegten Last ändert;
einen zweiten druckempfindlichen Sensor (2E), dessen Ausgangssignal sich je nach Größe der angelegten Last ändert;
ein Plattenteil (5), das so angeordnet ist, dass es die ersten und zweiten druckempfindlichen Sensoren (2A-D, 2d, 2e; 2E) in der Grundrissansicht umschließt;
ein erstes lastübertragendes Element (3A-D) zwischen dem ersten druckempfindlichen Sensor und dem Plattenteil; und
ein zweites lastübertragendes Element (4b) zwischen dem zweiten druckempfindlichen Sensor (2E) und dem Plattenteil (5),
wobei das erste lastübertragende Element eine innerhalb eines ersten Lastbereiches liegende Last auf den ersten druckempfindlichen Sensor überträgt, und
das zweite lastübertragende Element (3A-D) eine Last, die in einem zweiten Lastbereich oberhalb des ersten Lastbereich liegt, an den zweiten druckempfindlichen Sensor (2E) überträgt, **dadurch gekennzeichnet, dass**
der erste druckempfindliche Sensor (2A-D, 2d, 2e) die erste und zdie weite Elektrode (13-D, 13d, 13e; 14A-D, 14d, 14e) aufweist, die durch das Anlegen einer Last elektrisch miteinander verbunden werden,
der zweite druckempfindliche Sensor (2E) die dritte und vierte Elektrode (13E; 14E) aufweist, die durch das Anlegen einer Last elektrisch miteinander verbunden werden, und
die druckempfindliche Sensoreinheit (1A-E) einen Widerstandskörper (16) aufweist, der elektrisch in Reihe mit der ersten oder zweiten Elektrode des ersten druckempfindlichen Sensors (2A-D, 2d, 2e) geschaltet ist,
wobei die druckempfindliche Sensoreinheit umfasst:
ein erstes Basismaterial (11); und
ein zweites Basismaterial (21), das dem ersten Basismaterial zugewandt ist,
die erste Elektrode (13A-D, 13d, 13e) auf dem ersten Basismaterial (11) vorgesehen ist, und
die zweite Elektrode (14A-D, 14d, 14e) so auf dem ersten Basismaterial (11) angebracht ist, dass sie einem ersten Verbindungskörper zugewandt ist, der auf dem zweiten Basismaterial (21) angebracht der ersten Elektrode zugewandt ist, oder auf dem zweiten Basismaterial angebracht und der ersten Elektrode zugewandt ist,
wobei die druckempfindliche Sensoreinheit einen Abstandshalter (30) aufweist, der zwischen dem ersten Basismaterial (11) und dem zweiten Basismaterial (21) eingefügt ist,
der Abstandshalter (30) umfasst:
eine erste Öffnung (31), in der die erste und zweite Elektrode des ersten druckempfindlichen Sensors untergebracht sind; und
eine zweite Öffnung (32), in der die dritte und vierte Elektrode des zweiten druckempfindlichen Sensors untergebracht sind, und
eine Breite der ersten Öffnung (31) größer ist als die der zweiten Öffnung (32).

8. Die druckempfindliche Sensoreinheit nach einem der Ansprüche 1 bis 7,
bei der die druckempfindliche Sensoreinheit Folgendes umfasst:
eine Vielzahl der ersten druckempfindlichen Sensoren (2A-D, 2d, 2e); und
eine Pluralität der ersten lastübertragenden Elemente (3A-D),
wobei Vielzahl der ersten druckempfindlichen Sensoren (2A-D, 2d, 2e) ist um den zweiten druckempfindlichen Sensor (2E) herum angeordnet sind, und
die Pluralität der ersten lastübertragenden Elemente (3A-D) um das zweite lastübertragende Element (4) herum angeordnet ist.

## Revendications

1. Unité de capteurs sensibles à la pression (1A-E), comportant :
un premier capteur sensible à la pression (2A-D, 2d, 2e) dont la sortie change en fonction d'une grandeur d'une charge appliquée ;
un second capteur sensible à la pression (2E) dont la sortie change en fonction d'une grandeur d'une charge appliquée ;
un élément de plaque (5) agencé de manière à inclure les premier et second capteurs sensibles à la pression (2A-D, 2d, 2e ; 2E) en vue de dessus ;
un premier élément de transmission de charge (3A-D) intercalé entre le premier capteur sensible à la pression et l'élément de plaque ; et
un second élément de transmission de charge (4b) intercalé entre le second capteur sensible à la pression (2E) et l'élément de plaque (5),
dans laquelle le premier élément de transmission de charge transmet une charge appartenant à une première plage de charge au premier capteur sensible à la pression, et
le second élément de transmission de charge (3A-D) transmet une charge appartenant à une seconde plage de charge supérieure à la première plage de charge au second capteur sensible à la pression (2E),
**caractérisée en ce que**
le premier capteur sensible à la pression (2A-D, 2d, 2e) inclut des première et deuxième électrodes (13-D, 13d, 13e ; 14A-D, 14d, 14e) électriquement connectée l'une à l'autre par l'application d'une charge,
le second capteur sensible à la pression (2E) inclut des troisième et quatrième électrodes (13E ; 14E) électriquement connectées l'une à l'autre par l'application d'une charge, et
l'unité de capteurs sensibles à la pression (1A-E) inclut un corps résistif (16) électriquement connecté en série à la première ou deuxième électrode du premier capteur sensible à la pression (2A-D, 2d, 2e),
une valeur de résistance du corps résistif (16) est supérieure à une valeur de résistance du second capteur sensible à la pression (2E) dans un état dans lequel la troisième électrode et la quatrième électrode sont connectées électriquement.

2. Unité de capteurs sensibles à la pression selon la revendication 1,
dans laquelle une hauteur du premier élément de transmission de charge (3A-D) est supérieure à une hauteur du second élément de transmission de charge (4b), ou
le second élément de transmission de charge (4b) est plus souple que le premier élément de transmission de charge (3A-D).

3. Unité de capteurs sensibles à la pression selon la revendication 1,
dans laquelle l'unité de capteurs sensibles à la pression inclut une pluralité de premiers capteurs sensibles à la pression (2A-D, 2d, 2e),
l'unité de capteurs sensibles à la pression (1A-E) inclut :
un premier groupe d'électrodes (13) incluant une pluralité des premières électrodes (13A-D) électriquement connectées les unes aux autres ; et
un second groupe d'électrodes (14) incluant une pluralité des deuxièmes électrodes (14A-D) électriquement connectées les unes aux autres, et
le corps résistif (16) est électriquement connecté en série au premier ou second groupe d'électrodes.

4. Unité de capteurs sensibles à la pression selon l'une quelconque des revendications 1 à 3,
dans laquelle l'unité de capteurs sensibles à la pression (1A-E) inclut :
un premier matériau de base (11) ; et
un second matériau de base (21) faisant face au premier matériau de base (11),
la première électrode (13A-D) est disposée sur le premier matériau de base (11), et
la deuxième électrode (14A-D) est disposée sur le premier matériau de base (11) de manière à faire face à un premier corps de connexion disposé sur le second matériau de base (21) de manière à faire face à la première électrode, ou est disposée sur le second matériau de base de manière à faire face à la première électrode.

5. Unité de capteurs sensibles à la pression selon l'une quelconque des revendications 1 à 4,
dans laquelle l'unité de capteurs sensibles à la pression inclut :
un premier matériau de base (11) ; et
un second matériau de base (21) faisant face au premier matériau de base,
la troisième électrode (13E) est disposée sur le premier matériau de base (11), et
la quatrième électrode (14E) est disposée sur le premier matériau de base (11) de manière à faire face à un second corps de connexion disposé sur le second matériau de base (21) de manière à faire face à la troisième électrode, ou est disposée sur le second matériau de base de manière à faire face à la troisième électrode.

6. Unité de capteurs sensibles à la pression selon la revendication 4 ou 5,
dans laquelle une hauteur du premier élément de transmission de charge (3A-D) est supérieure à une hauteur du second élément de transmission de charge (4b),
le premier élément de transmission de charge (3A-D) est lié à au moins un des premier et second matériaux de base et lié à l'élément de plaque (5), et
le second élément de transmission de charge (4b) est lié à un seul élément parmi le premier matériau de base (11), le second matériau de base (21) et l'élément de plaque (5).

7. Unité de capteurs sensibles à la pression (1A-E), comportant :
un premier capteur sensible à la pression (2A-D, 2d, 2e) dont la sortie change en fonction d'une grandeur d'une charge appliquée ;
un second capteur sensible à la pression (2E) dont la sortie change en fonction d'une grandeur d'une charge appliquée ;
un élément de plaque (5) agencé de manière à inclure les premier et second capteurs sensibles à la pression (2A-D, 2d, 2e ; 2E) en vue de dessus ;
un premier élément de transmission de charge (3A-D) intercalé entre le premier capteur sensible à la pression et l'élément de plaque ; et
un second élément de transmission de charge (4b) intercalé entre le second capteur sensible à la pression (2E) et l'élément de plaque (5),
dans laquelle le premier élément de transmission de charge transmet une charge appartenant à une première plage de charge, au premier capteur sensible à la pression, et
le second élément de transmission de charge (3A-D) transmet une charge appartenant à une seconde plage de charge supérieure à la première plage de charge, au second capteur sensible à la pression (2E),
**caractérisée en ce que**
le premier capteur sensible à la pression (2A-D, 2d, 2e) inclut des première et deuxième électrodes (13-D, 13d, 13e ; 14A-D, 14d, 14e) électriquement connectée l'une à l'autre par l'application d'une charge,
le second capteur sensible à la pression (2E) inclut des troisième et quatrième électrodes (13E ; 14E) électriquement connectées l'une à l'autre par l'application d'une charge, et
l'unité de capteurs sensibles à la pression (1A-E) inclut un corps résistif (16) électriquement connecté en série à la première ou deuxième électrode du premier capteur sensible à la pression (2A-D, 2d, 2e),
l'unité de capteurs sensibles à la pression inclut :
un premier matériau de base (11) ; et
un second matériau de base (21) faisant face au premier matériau de base,
la première électrode (13A-D, 13d, 13e) est disposée sur le premier matériau de base (11), et
la deuxième électrode (14A-D, 14d, 14e) est disposée sur le premier matériau de base (11) de manière à faire face à un premier corps de connexion disposé sur le second matériau de base (21) de manière à faire face à la première électrode, ou est disposée sur le second matériau de base de manière à faire face à la première électrode.
l'unité de capteurs sensibles à la pression inclut un élément d'espacement (30) intercalé entre le premier matériau de base (11) et le second matériau de base (21),
l'élément d'espacement (30) inclut :
une première ouverture (31) dans laquelle les première et deuxième électrodes du premier capteur sensible à la pression sont reçues ; et
une seconde ouverture (32) dans laquelle les troisième et quatrième électrodes du second capteur sensible à la pression sont reçues, et
une largeur de la première ouverture (31) est supérieure à une largeur de la seconde ouverture (32).

8. Unité de capteurs sensibles à la pression selon l'une quelconque des revendications 1 à 7,
dans laquelle l'unité de capteurs sensibles à la pression inclut :
une pluralité des premiers capteurs sensibles à la pression (2A-D, 2d, 2e) ; et
une pluralité des premiers éléments de transmission de charge (3A-D),
les capteurs de la pluralité de premiers capteurs sensibles à la pression (2A-D, 2d, 2e) sont agencés autour du second capteur sensible à la pression (2E), et
les capteurs de la pluralité de premiers éléments de transmission de charge (3A-D) sont agencés autour du second élément de transmission de charge (4).
